# EUROPÄISCHE PATENTSCHRIFT

(11) **EP 1 311 645 B1**
(45) Veröffentlichungstag und Bekanntmachung des Hinweises auf die Patenterteilung: **25.01.2006**
(21) Anmeldenummer: 01962882.5
(22) Anmeldetag: 27.07.2001
(51) Int. Cl.: C09J 107/02

(54) **KLEBEBAND, INSBESONDERE ZU VERPACKUNGSZWECKEN**
ADHESIVE TAPE PARTICULARLY FOR WRAPPING PURPOSES
BANDE ADHESIVE, NOTAMMENT POUR EMBALLAGE

(30) Priorität: 27.07.2000 DE 10036705
(43) Veröffentlichungstag der Anmeldung: 21.05.2003
(73) Patentinhaber: tesa AG, 20253 Hamburg (DE)
(72) Erfinder: GALLE, André, 22767 Hamburg (DE); MÜSSIG, Bernhard, 21218 Seevetal (DE); RÖBER, Stefan, 22453 Hamburg (DE); SINNEN, Herbert, 25421 Pinneberg (DE); WENNINGER, Dieter, 25837 Singapore (SG)
(74) Vertreter: Stubbe, Andreas
(86) Internationale Anmeldenummer: PCT/EP2001/008745
(87) Internationale Veröffentlichungsnummer: WO 2002/010304

(56) Entgegenhaltungen:
- EP-A- 0 960 923
- WO-A-94/24221
- GB-A- 1 067 568
- PATENT ABSTRACTS OF JAPAN vol. 018, no. 547 (C-1262), 19. Oktober 1994 (1994-10-19) & JP 06 192634 A (NITTO DENKO CORP), 12. Juli 1994 (1994-07-12)

## Beschreibung

Die Erfindung bezieht sich auf ein Klebeband mit einem Träger auf Basis von Polyolefinen, der einseitig mit einer lösemittelfreien Klebemasse auf Basis von Naturkautschuklatex beschichtet ist, sowie die Verwendung des Klebebands als Verpackungsklebeband.

Klebebänder mit Folien auf Basis von Polyolefinen, wie beispielsweise biaxial gerecktem Polypropylen, und Klebemassen auf Basis von lösemittelhaltigem Naturkautschuk oder wäßrigen Acrylatdispersionen sind bekannt und werden von bekannten Herstellern angeboten.

Eine Beschreibung befindet sich beispielsweise in "Packaging Tapes", Stefan Röber in Handbook of Pressure Sensitive Adhesive Technology, Third Edition, edited by Donatas Satas, Satas&Associates, Warwick, Rhode Island pp. 787-814. Weitere Beschreibungen befinden sich in "European Adhesives & Sealants" 10(4), 1993, 29 von G. Pedala und "European Adhesives & Sealants 2(2), 1985, 18 von R.W. Andrew".

Auf Grund der bekannten Nachteile bei der Herstellung von lösemittelhaltigen Klebebändern, wie zum Beispiel das aufwendige Recycling von Lösungsmitteln, die Emission von Lösungsmittel in die Umwelt, die Gefährdung am Arbeitsplatz durch leicht entflammbare Lösungsmittel und die Beschränkung der Beschichtungsgeschwindigkeit durch Trocknung der Klebemasse, sind lösemittelfreie Technologien zur Herstellung von Klebebändern von fortschreitender Bedeutung.

Nachteilig ist neben der bereits beschriebenen Problematik der Lösemitteltechnologie der erforderliche Abbau des Naturkautschuks bei der Herstellung der Klebemasse, die Mastikation. Hieraus resultiert eine deutlich nachlassende Kohäsivität der Klebemasse je nach Stärke des Abbau durch mechanische Belastung.

Der zielgerichtet durchgeführte technische Prozeß des Kautschukabbaus unter der kombinierten Einwirkung von Scherspannung, Temperatur, Luftsauerstoff wird in der Fachliteratur als Mastikation (engl.: mastication) bezeichnet und zumeist im Beisein chemischer Hilfsmittel durchgeführt, welche aus der Fachliteratur als Mastiziermittel oder Peptizer, seltener auch als "chemische Plastiziermittel" bekannt sind.
Der Mastikationsschritt ist in der Kautschuktechnologie nötig, um eine Erleichterung der Aufnahme der Zusatzstoffe zu erzielen.

Nach Römpp (Römpp Lexikon Chemie - Version 1.5, Stuttgart/New York: Georg Thieme Verlag 1998) stellt die Mastikation eine gummitechnologische Bezeichnung für den Abbau langkettiger Kautschuk-Moleküle zur Erhöhung der Plastizität beziehungsweise Reduzierung der (Mooney-)Viskosität von Kautschuken dar. Die Mastikation wird durchgeführt durch Behandlung insbesondere von Naturkautschuk in Knetem oder zwischen Walzen bei möglichst niedrigen Temperaturen in Gegenwart von Mastikationshilfsmitteln (Mastizierhilfsmittel). Die dabei einwirkenden hohen mechanischen Kräfte führen zu einem "Zerreißen" der Kautschuk-Moleküle unter Bildung von Makroradikalen, deren Rekombination durch Reaktion mit Luftsauerstoff verhindert wird. Mastikationshilfsmittel wie aromatische oder heterocyclische Mercaptane beziehungsweise deren Zink-Salze oder Disulfide beschleunigen durch Begünstigung der Bildung von Primärradikalen den Mastikationsprozeß. Aktivatoren wie Metall- (Eisen-, Kupfer-, Cobalt-) Salze von Tetraazaporphyrinen oder Phthalocyaninen ermöglichen eine Erniedrigung der Mastikationstemperatur. Mastikationshilfsmittel werden bei der Mastikation von Naturkautschuk in Mengen von ca. 0,1 bis 0,5 Gew.-% in Form von Masterbatches eingesetzt, die eine gleichmäßige Verteilung dieser geringen Chemikalienmenge in der Kautschukmasse erleichtern.

Die Mastikation ist streng zu unterscheiden von dem sich bei allen üblichen lösungsmittelfreien Polymertechnologien wie Compoundieren, Fördern und Beschichten in der Schmelze ergebenden Abbau, der Degradation (engl.: degradation).
Die Degradation ist eine Kollektivbezeichnung für unterschiedliche Prozesse, die das Aussehen und die Eigenschaften von Kunststoffen verändern. Degradation kann zum Beispiel durch chemische, thermische, oxidative, mechanische oder biologische Einflüsse oder auch durch Strahleneinwirkung (wie (UV-)Licht) verursacht werden. Folge sind zum Beispiel Oxidation, Kettenspaltungen, Depolymerisation, Vernetzung beziehungsweise Abspaltung von Seitengruppen der Polymeren. Die Stabilität von Polymeren gegenüber einer Degradation kann durch Additive, zum Beispiel durch Zusatz von Stabilisatoren wie Antioxidantien oder Photostabilisatoren erhöht werden.

Die Verwendung stark abgebauter Klebemassen auf Basis von Naturkautschuk-Schmelzhaftklebem für Klebebänder, insbesondere Verpackungsklebebänder, zum Verschließen von Kartons aus recyceltem Papier oder Kartonagen, führt dazu, daß sich die Kartons frühzeitig öffnen. Bei ausreichender großer Deckelspannung des Kartons, verursacht durch den Fülldruck des verpackten Materials im Karton oder durch die dem Verschließen entgegenwirkende Spannung des Verpackungsmaterials, löst sich das Klebeband von der Kartonoberfläche und der Karton öffnet sich durch Abrutschen des Verpackungsklebebandes.
Verpackungsklebebänder für Kartonagen können daher nicht mit einer aus Düsen beschichteten Klebemasse auf Basis von Naturkautschuk hergestellt werden. Die Kohäsion derartiger Massen ist nicht ausreichend.

Die Kohäsion und damit die Verpackungssicherheit von Klebebändern mit einer Klebemasse auf Basis von Naturkautschuk kann entweder durch Vernetzung der Kautschuk-Klebemasse und/oder durch eine Herstellungsvariante der Klebemasse, bei der der eingesetzte Naturkautschuk deutlich weniger stark abgebaut wird und somit ein höheres Molekulargewicht aufweist, verbessert werden. Hierdurch kann einem Abrutschen der Klebebänder auf der Kartonoberfläche, wie oben beschrieben, entgegengewirkt werden.

Lösemittelfreie Technologien zur Herstellung von Klebebändern, insbesondere Verpackungsklebebändem, ist bisher auf die Verwendung von Klebemasse auf Basis von Acrylatdispersionen sowie auf die Verwendung von schmelzenden, thermoplastischen Elastomeren beschränkt.
Vorteil dieser thermoplastischen Elastomeren, vorwiegend Blockcopolymere mit Polystyrolblöcken, ist der relativ niedrige Erweichungspunkt und die damit verbundene Vereinfachung des Auftrags- beziehungsweise Streichprozesses sowie die Vermeidung der oben beschriebenen Nachteile der lösemittel-basierenden Technologien.

Weitere lösemittelfreie Systeme auf Basis wäßriger Klebestoffe, wie beispielsweise Klebesysteme auf Basis von Polyvinylacetat, Polyvinylacetat-Ethylen-Copolymere, Neopren, Styrol-Butadien, Polyurethan, Polyvinylalkohol, finden aufgrund einer für Klebebänder, insbesondere Verpackungsklebebänder, ungünstigen Kosten und/oder Leistungsstruktur keine oder nur geringfügige Anwendung.
Eine Übersicht über die wichtigsten wäßrigen Klebstoffsysteme sowie ihre Verwendung findet sich in "Solvent free adhesives", T.E. Rolando (H. B. Fuller) in Rapra Rev. Rep. 1997, 9(5), 3-30 Rapra Technology Ltd.

Verschiedene Wege zur lösungsmittelfreien Herstellung und Verarbeitung von Kautschuk-Haftklebern sind bekannt.
Eine Übersicht über solche Klebemassen und deren Einsatz im Bereich der Pressure Sensitive Adhesives findet sich in "Natural Rubber Adhesives" (G. L. Butler in Handbook of Pressure Sensitive Adhesive Technology, Third Edition, edited by Donata Satas, Van Nostrand Reinhold New York, pp.261-287).

Alle bekannten Verfahren zeichnen sich durch extrem starken Kautschukabbau aus. Dieser erfordert bei der Weiterverarbeitung der Massen zu Selbstklebebändern extreme Vemetzungsbedingungen und hat außerdem ein teilweise eingeschränktes Anwendungsprofil, insbesondere für den Einsatz resultierender Selbstklebebänder bei höheren Temperaturen, zur Folge. Lösemittelfreie Schmelzhaftkleber auf Basis von nichtthermoplastischen Elastomeren, wie zum Beispiel Naturkautschuk oder anderer hochmolekularer Kautschuke, weisen ohne Vemetzungsschritt der Klebemasse eine für die meisten Anwendungen ungenügende Kohäsion auf und kommen somit nicht für den Einsatz im Rahmen eines Verpackungsklebebandes in Frage. Ursache für dieses Versagen von unvernetzten Klebemassen auf Basis Naturkautschuk ist die relativ starke Reduzierung des Molekulargewichts durch die Verarbeitung beziehungsweise durch den Herstellungsprozess der Klebemassen auf Basis von Naturkautschuk und die hierbei resultierende, verminderte beziehungsweise ungenügende Kohäsion der Klebemassen.

In CA 698 518 wird ein Prozeß beschrieben, wie eine Masseherstellung durch Zusatz hoher Weichmacheranteile und/oder gleichzeitig starker Mastikation des Kautschuks zu erreichen ist. Zwar lassen sich nach diesem Verfahren Haftkleber mit extrem hoher Anfaßklebkraft erzielen, durch den relativ hohen Weichmacheranteil oder auch den starken Abbau der Molekularstruktur des Elastomers auf ein Molekulargewichtsmittel von M_{w} ≤ 1 Million ist die anwendergerechte Scherfestigkeit auch mit anschließender höherer Vernetzung nur eingeschränkt zu erreichen.

Die Verwendung von Polymerblends, wo neben nicht-thermoplastischem Naturkautschuk auch Blockcopolymere im Verhältnis von ca. 1:1 eingesetzt werden, stellt im wesentlichen eine unbefriedigende Kompromißlösung dar, da sich weder hohe Scherfestigkeiten beim Einsatz der Selbstklebebänder bei höheren Temperaturen, noch deutliche Verbesserungen gegenüber den in CA 698 518 beschriebenen Eigenschaften ergeben.

Roh-Naturkautschuklatex wird von den Plantagen geliefert und mittels entsprechender Methoden gereinigt, konserviert und aufkonzentriert. Allgemein beschrieben werden die Latextypen und Methoden der Verarbeitung in "Naturkautschuk - Technisches Informationsblatt", Malaysian Rubber Producers Research Association, L1, 1977 und in "Kautschuktechnologie", Werner Hofmann, Gentner Verlag Stuttgart S. 51ff.

Naturkautschuklatex wird als Naturprodukt von sogenannten Latexbäumen geerntet. Nach diversen Aufbereitungsschritten zur Auftrennung und Reinigung werden vier Grundtypen von Naturkautschuklatices unterschieden:
1. Standard Naturkautschuklatex mit einem hohen Ammoniakgehalt von 0,7 Gew.-%
2. Naturkautschuklatex mit niedrigem Ammoniakgehalt von 0,2 Gew.-% in Kombination mit Zinkoxid und Tetramethyl-thiuram-dissulphid < 0,035 Gew.-%
3. Naturkautschuklatex doppelt zentrifugiert mit besonders hoher Reinheit
4. Naturkautschuklatex teilweise vulkanisiert für speziellen Anwendungen

Eine Mastikation und der damit verbundene Abbau des Naturkautschuks ist bei der Herstellung von Klebemassen auf Basis von Naturkautschuklatex nicht notwendig, da im Falle der lösemittelfreien, wäßrigen Klebemasse durch einfaches Vermischen der Komponenten eine Mastikation und damit ein Molekülabbau durch mechanische Belastung nicht stattfindet. Hieraus resultiert eine enge Verschlaufung der Naturkautschuk-Latex/Isoprenmoteküle, ein hohes Molekulargewicht bedingt durch fehlende Mastikation, eine breite Molekulargewichtsverteilung und ein niedriger Erweichungspunkt T_{g}.

Diese Faktoren bedingen eine sehr gute Balance zwischen Kohäsion und Adhäsion der aus Harzabmischungen resultierenden Klebemasse, und weiterhin ein für Klebebänder äußerst leistungsstarkes Eigenschaftsprofil über einen sehr breiten Temperaturbereich.

Die Herstellung von wäßrigen Klebemassen auf Basis von Naturkautschuklatex ist bekannt. Diese Klebemassen werden wie oben beschrieben zur Herstellung von selbstklebenden Etiketten verwendet. Hierbei werden die üblichen Methoden zur Herstellung von Dispersionsklebestoffen verwendet.

Ebenfalls ist die Herstellung von Klebemassensystemen, welche Naturkautschuklatex enthalten, in EP 0 960 923 A1 beschrieben. Hierbei wird zum einen die Herstellung von Dispersionsklebemassen offenbart als auch die Einbringung von Naturkautschuklatex in andere Naturkautschukklebesysteme mittels Kneter, Mischer oder Extruder. Diese derart hergestellten Klebemassen können auf Folie oder Vlies beschichtet werden.
Eine Verbesserung der Verpackungseigenschaften derartiger Klebebänder mittels einer kontrollierten, nachhaltigen Vernetzung der Klebemasse, die zudem im Rahmen eines sinnvollen Produktionsprozesses eingesetzt werden kann, ist nicht beschrieben.

Bei Verwendung von Klebemassenvariationen auf Basis von Naturkautschuklatex ist - wie bereits oben ausgeführt - eine nachhaltige Vernetzung nicht notwendig, um ein gutes den meisten anderen Klebemassensystemen überlegenes Verpackungsverhalten zu erzielen.
Durch den Einsatz der zuvor beschriebenen stabilisierenden Harzdispersionen sowie durch Verwendung von Naturkautschuklatex und somit des Fehlens jeglichen mechanischen Kautschukabbaus ist eine Herstellung, Verarbeitung und Beschichtung von Klebemassen auf Basis von Naturkautschuklatex möglich und damit die Herstellung von Klebebändern, weil die Klebemasse eine sehr hohe Kohäsion und damit optimale Verpackungssicherheit aufweist.

Nicht nur für Verpackungsklebebänder zum Kartonverschluß, sondern auch für andere Verpackungsklebebänder, wie Strapping-Tapes, ist daher eine ausreichende Kohäsion der Klebemasse auf Basis von Naturkautschuk notwendig.

Dieses positive Verhalten über einen breiten Temperaturbereich wird ausgenutzt bei dem in JP 56 030 481 beschriebenen Klebeband mit einer Klebemasse auf Basis von Naturkautschuklatex. Durch Verwendung des Naturkautschuklatex wird ein stoßunempfindliches Verhalten bei niedrigen Temperaturen beschrieben.

Ein weiterer Punkt ist, daß Naturkautschuklatex sich durch ein besonders breites Spektrum an Anwendungen auszeichnet. So ist Naturkautschuklatex einerseits für den Einsatz als Klebemasse für Verpackungsmaterialien geeignet und zum anderen für Anwendungen außerhalb der Klebetechnologie.

Nachteilig an Klebemassensystemen auf Basis von Naturkautschuklatex ist die mangelnde Stabilität des Rohstoffes Naturkautschuklatex gegenüber mechanischer Belastung und der damit verbundenen Koagulation des Naturkautschuklatex in der Klebemasse. Diese Scherempfindlichkeit bedingt die eingeschränkte Handhabbarkeit und Einsetzbarkeit des Naturkautschuklatex für die Klebemassentechnologie und Klebebandindustrie. Die Herstellung von Klebebändern, bei der die Naturkautschuklatex enthaltende Klebemasse mit hoher Geschwindigkeit auf eine Folie beschichtet werden kann, ist nicht bekannt.

Durch den Einsatz von stabilisierenden Harzdispersionen und/oder oberflächenaktiven Substanzen, wie zum Beispiel Emulgatoren, kann die Stabilität des Naturkautschuklatex deutlich gesteigert werden. Mit der Steigerung der Stabilität des Naturkautschuklatex durch oberflächenaktive Stoffe in hohen Konzentrationen ist aber gleichzeitig ein Verlust der Kohäsion der Klebemasse gekoppelt, so daß hierbei eine ausgewogene Balance zwischen Stabilisierung und ausreichender Kohäsion gefunden werden muß.

Die allgemeine Verwendung von Naturkautschuklatex für Klebemassen sowie den Latex stabilisierende Harzdispersionen ist beschrieben in "Tackified waterbome adhesive for PSA tapes", J. G. de Hullu, European Adhesive & Sealants, 12 (1998), pp 11-12. Durch den Einsatz derartiger den Naturkautschuklatex stabilisierender Harzdispersionen wird eine Verarbeitung beziehungsweise Beschichtung von Klebemassen auf Basis von Naturkautschuklatex ermöglicht. Durch das störungsfreie Aufbringen der Dispersionsklebemassen auf einen polymeren Träger ist eine technisch machbare und ökonomisch sinnvolle Klebeband-Produktion möglich. Durch den Einsatz einer geeigneten Zusammensetzung der Klebemasse und technischer Einstellung und Optimierung der Beschichtungsanlagen ist ein Einsatz dieser Technologie ermöglicht.
Die Anwendung und die Entwicklung eines Klebebandes, welches leise abrollt und für Verpackungsanwendungen geeignet ist, ist hierbei ist von J.G. de Hullu nicht beschrieben. Die Verwendung von leise abrollenden Klebebändern, insbesondere zum Kartonverschluß ist jedoch von großer Bedeutung innerhalb der Verpackungsindustrie, um die Lärmbelastung in den Verpackungshallen zu erniedrigen und somit die Arbeitsleistung zu erhöhen. Die Fähigkeit des leisen Abrollens ist von fundamentaler Bedeutung, um ein Verpackungsklebeband im mittleren bis oberen Preis-Leistungssegment einzuordnen.

Verpackungsklebebänder zum Kartonverschluß werden bei der Verpackungsindustrie maschinell oder manuell appliziert. Hierbei ist besonders in großen Verpackungsstrasse und Hallen das leise, nicht knattemde Abrollverhalten ein zusätzlicher Vorteil von Verpackungsklebebändern um das Arbeiten angenehmer zu gestallten. Dies ist ein wesentliches Qualitätsmerkmal für Verpackungsklebebänder in Europa.
Hierbei werden bei leise ablaufenden Klebebändern, in einem Abstand von 25 cm, weniger als 80 dB (A) gemessen, während laut, knatternd ablaufende Verpackungsklebebänder deutlich höhere dB(A) Werte erreichen. Dies ist beschrieben in "Schallpegelmessungen, Interner Forschungsbericht Beiersdorf AG".

Derzeit im Markt befindliche Klebebänder mit einem Träger auf Basis von gerecktem Polypropylen können je nach Klebemasse in folgende Varianten unterteilt werden:
- Klebebänder mit einer Klebemasse auf Basis von lösemittelhaltigem Naturkautschuk (a)
- Styrol-Isopren-Styrol Schmelzhaftkleber (b)
- wasserbasierenden Acrylatdispersion (c)

(a) Polypropylenbasierende Verpackungsklebebänder mit einer Klebemasse auf Basis von lösemittelhaltigem Naturkautschuk laufen bei entsprechender Masse leise ab. Hierzu ist eine weiche, flexible Masse notwendig. Meistens jedoch sind derartige Klebebänder mit einer lösemittelhaltigen Carbamatlackierung versehen, um die Abrollkraft zu reduzieren. Die Rückseitenlackierung führt dazu, daß das Klebeband laut und knatternd abrollt.
(b) Polypropylenbasierende Verpackungsklebebänder mit einer Klebemasse auf Basis von Styrol-Isopren-Styrol Schmelzhaftklebern können nur in Verbindung mit einer geeigneten Rückseitenlackierung eingesetzt werden. Ohne Rückseitenlackierung ist bedingt durch die chemische Struktur der Masse die Abrollkraft des Klebebandes so hoch, daß der Träger beim Abrollen geschädigt wird und somit die Verpackungseigenschaften stark herabgesetzt werden. Die Rückseitenlackierung, meist lösemittelhaltige Carbamatlackierungen, führen dazu, daß das Klebeband extrem laut und knatternd abrollt.
(c) Polypropylenbasierende Verpackungsklebebänder mit einer Klebemasse auf Basis von wasserbasierenden Acrylaten werden in Kombination mit einer Coronabehandlung der Rückseite, der Klebemasse abgewandten Trägerseite, eingesetzt. Ohne entsprechende Coronabehandlung der Rückseite laufen diese Klebebänder laut und knatternd ab. Mit entsprechend eingestellter Coronabehandlung der Rückseite kann ein leises und knatterfreies Ablaufen der Verpackungsklebebänder erreicht werden.
   Dies wird in der EP 0 096 841 beschrieben. Durch diese Coronabehandlung der Trägerrückseite, zum Beispiel nach der Beschichtung während des Schneidprozesses, wird die Abrollkraft der Klebebänder erhöht und somit ein Abplatzen der Klebemasse vom Träger verhindert. Dieses Abplatzen der Klebemasse vom Träger auf Grund des Abrollvorganges führt zu einem lauten, knattemden Abrollverhalten. Mittels der Coronabehandlung der Rückseite in geeignetem Maße wird das Klebeband leise abrollend. Hierbei wird durch geeignete Coronabehandlung der Rückseite die Abrollkraft eingestellt und somit auch das Abrollverhalten eingestellt. Bis zum heutigen Entwicklungsstand sind alle Klebebänder ohne Rückseitencoronabehandlung laut abrollend.
   Die Coronabehandlung der Klebebänder bringt im wesentlichen Nachteile mit sich. Zum ersten ist ein zusätzlicher Arbeitsschritt verbunden, der eine zusätzliche maschinelle Ausrüstung verlangt. Im Falle der Coronabehandlung beim Schneidprozeß können nur Schneidmaschinen mit einer Schneidcorona verwendet werden. Dies erfordert teilweise zusätzliche maschinelle Anschaffungen. Zum zweiten ist die genaue Stärke der Coronabehandlung entscheidend, um den gewünschten Effekt zu erzielen. Dies bringt eine große Prozeßunsicherheit mit sich, die zu verstärkter Qualitätskontrolle verpflichtet.
   Im Falle einer zu geringen Coronaleistung wird der gewünschte Effekt des leisen Abrollens nur unzureichend erfüllt, da die resultierenden fertigen Klebebänder nicht nachbehandelt werden können, ist die Produktion von Ausschuß die Folge. Im Falle einer zu starken Coronaleistung wird die Abrollkraft zu stark erhöht, wodurch es zu einer Trägerüberdehnung, einem Trägerabriß oder zu einem Übergang der Klebemasse während des Abrollens des Klebebandes kommt.

Verpackungsklebebänder mit einem Träger auf Basis von gerecktem Polypropylen und einer Klebemasse auf Basis einer wasserbasierenden Klebemasse, welche leise abrollen, ohne eine Behandlung der Klebemasse abgewandten Trägerseite, durch zum Beispiel Coronabehandlung, sind nicht bekannt und nicht Stand der Technik.

Verpackungsklebebänder mit einer Klebemasse auf Basis von Naturkautschuklatex können somit die Vorteile einer wasserbasierenden Klebemasse mit dem Wegfall der nicht mehr notwendigen Rückseitencorona vereinen und dennoch leise, knatterfrei ablaufende Klebebänder darstellen.

Allgemein ist Naturkautschuklatex als Komponente für Klebemassen bekannt und unter anderem in Patenten beschrieben. Die Einsatzgebiete derartiger Klebemassen auf Basis von Naturkautschuklatex sind Anwendungen im Bereich der Etiketten und Pflastertechnologie.

Monoaxial und biaxial gereckte Folien auf Basis von Polypropylen werden in großen Mengen für Verpackungsklebebänder eingesetzt. Während für die Anwendung eines Verpackungsklebebandes für den Kartonverschluß biaxial gereckte Folien auf Basis Polypropylen bevorzugt werden, finden im Bereich der Strapping-Tapes monoaxial gereckte Polypropylenfolien Verwendung. Diese zeichnen sich durch sehr hohe Reißfestigkeit und geringe Dehnung in Längsrichtung aus und sind sehr gut für das Bündeln beziehungsweise für den Zusammenhalt von Paletten geeignet. Bei Verwendung von Klebemassen, die eine ungenügende Kohäsion aufweisen oder eine unzureichende Verankerung der Klebemasse auf der Folie, führt das Abrutschen der Strapping-Tapes zu einem Verrutschen der Paletten und somit zu einer ungenügenden Sicherung der Paletten. Eine unzureichende Verankerung der Klebemasse auf der Folie führt bei Verwendung von Kartonverschlußbändern zu einem frühzeitigen Öffnen der verpackten Kartons.

Thermoplastfolien auf Basis von Polyvinylchlorid (PVC) werden zur Herstellung von Klebebändern von verschiedenen Herstellern eingesetzt. Hierbei zeichnen sich vor allem Folien auf Basis von PET durch eine hohe Reißdehnung und Wärmebeständigkeit von 130 °C bis 175 °C und Resistenz gegenüber verdünnten Laugen und Säuren aus. Weiterhin besitzen Folien auf Basis von Polyestern eine sehr hohe Abriebfestigkeit und Durchschlagfestigkeit, sind aber aufgrund des relativ hohen Preises gegenüber Folien auf Basis von Polyolefinen weniger verbreitet im Bereich der Verpackungsklebebänder.

Bei der Herstellung von Klebebändern mit Klebemassen auf Basis von Naturkautschuk werden hierbei sowohl wasserbasierte als auch lösemittelhaltige Primer als Haftvermittler zwischen Klebemasse und Trägerfolie eingesetzt. Diese eingesetzten Haftvermittler haben zum Teil eine auf die aus Lösung aufgetragene Klebemasse auf Basis von Naturkautschuk vernetzende Wirkung.

Aufgabe der vorliegenden Erfindung ist es, Klebebänder mit Folien auf Basis von gereckten Polyolefinen und lösemittefrei hergestellten, wasserbasierenden Klebemassen auf Basis von Naturkautschuklatex zu schaffen, welche ein leises Abrollverhalten zeigen, ohne daß die der Klebemasse entgegengesetzte Trägerseite des Klebebandes mittels Coronabehandlung aktiviert werden muß.
Weiterhin sollen die Klebebänder leicht abrollen. Darüber hinaus sollen die neuen Klebebänder als Verpackungsklebebänder für handelsübliche Kartonagen hervorragend geeignet sein.

Gelöst wird diese Aufgabe durch ein Klebeband, wie es im Hauptanspruch dargelegt ist. Gegenstand der Unteransprüche sind vorteilhafte Fortbildungen des Erfindungsgegenstands. Des weiteren betrifft die Erfindung Verwendungsvorschläge des erfindungsgemäßen Klebebands.

Demgemäß betrifft die Erfindung ein einseitig selbstklebend ausgerüstetes Klebeband, mit einer Folie auf Basis gereckter Polyolefine, wobei die der Klebeschicht abgewandte Folienseite keine Oberflächenbehandlung aufweist.
Die Folie ist einseitig mit einer Klebeschicht versehen, hergestellt aus einer Mischung enthaltend

| | |
|---|---|
| 30 bis 65 Gew.-% | ein Naturkautschuklatex |
| 35 bis 70 Gew.-% | eine wäßrige Harzdispersion auf Basis eines Kohlenwasserstoffharzes. |

Erfindungsgemäß als Folien einsetzen lassen sich monoaxial und biaxial gereckte Folien auf Basis von Polyolefinen, dann Folien auf Basis von gerecktem Polyethylen oder gereckten Copolymeren, enthaltend Ethylen- und/oder Polypropyteneinheiten.

Monoaxial gerecktes Polypropylen zeichnet sich durch seine sehr hohe Reißfestigkeit und geringe Dehnung in Längsrichtung aus und wird beispielsweise zur Herstellung von Strapping-Tapes verwendet. Besonders bevorzugt zur Herstellung der erfindungsgemäßen Klebebänder, insbesondere zum Bündeln und Palettieren von Kartonagen und anderen Gütern, sind monoaxial gereckte Folien auf Basis von Polypropylen.

Die Dicken der monoaxial gereckten Folien auf Basis von Polypropylen liegen bevorzugt zwischen 25 und 200 µm, insbesondere zwischen 40 und 130 µm.

Monoaxial gereckte Folien sind überwiegend einschichtig, grundsätzlich können aber auch mehrschichtige monoaxial gereckte Folien hergestellt werden. Bekannt sind überwiegend ein-, zwei- und dreischichtige Folien, wobei die Anzahl der Schichten auch größer gewählt werden kann.

Weiterhin besonders bevorzugt zur Herstellung der erfindungsgemäßen Klebebänder, die u.a. zum sicheren Kartonverschluß dienen, sind biaxial gereckte Folien auf Basis von Polypropylen mit einem Reckverhältnis in Längsrichtung zwischen 1:4 und 1:9, bevorzugt zwischen 1:4,8 und 1:6 sowie einem Reckverhältnis in Querrichtung zwischen 1:4 und 1:9, bevorzugt zwischen 1:4,8 und 1:8,5.

Die erzielten Elastizitätsmodule in Längsrichtung, gemessen bei 10% Dehnung nach ASTM D882, liegen üblicherweise zwischen 1000 und 4000 N/mm², vorzugsweise zwischen 1500 und 3000 N/ mm².

Die Dicken der biaxial gereckten Folien auf Basis von Polypropylen liegen besonders zwischen 15 und 100 µm, vorzugsweise zwischen 20 und 50 µm.

Biaxial gereckte Folien auf Basis von Polypropylen können mittels Blasfolienextrusion oder mittels üblicher Flachfolienanlagen hergestellt werden. Biaxial gereckte Folien werden sowohl ein- als auch mehrschichtig hergestellt. Im Falle der mehrschichtigen Folien können auch hier die Dicke und Zusammensetzung der verschiedenen Schichten gleich sein aber auch verschiedene Dicken und Zusammensetzungen sind bekannt.

Besonders bevorzugt für die erfindungsgemäßen Klebebänder sind einschichtige, biaxial oder monoaxial gereckte Folien und mehrschichtige, biaxiale oder monoaxiale Folien auf Basis von Polypropylen, die einen ausreichend festen Verbund zwischen den Schichten aufweisen, da ein Delaminieren der Schichten während der Anwendung nachteilig ist.

Die Haftung des Haftvermittlers auf der Thermoplastfolie auf Basis von Polyolefinen kann durch Coronabehandlung oder Flammenvorbehandlung verbessert werden, denn gerade die Oberflächen der Folien auf Basis von gereckten Polyolefinen können durch diese allgemein bekannten Verfahren, wie die Corona- oder Flammenbehandlung, behandelt werden. Bevorzugt sind Oberflächenbehandlungen durch Coronabehandlung.
Eine Übersicht über die Verfahren zur Oberflächenbehandlung enthält beispielsweise der Artikel "Surface pretreatment of plastics for adhesive bonding" /A. Kruse; G. Krüger, A. Baalmann and O. D. Hennemann; J. Adhesion Sci. Technol., Vol 9, No12, pp 1611-1621 (1995).

Die biaxial gereckten Folien für die erfindungsgemäßen Klebebänder werden auf der der Masse beziehungsweise dem gegebenenfalls vorhandenen Haftvermittler zugewandten Seite corona- oder flammenvorbehandelt, allerdings nicht oberflächenbehandelt und/oder corona- oder flammenvorbehandelt auf der der Masse abgewandten Seite.

In einer weiteren bevorzugten Ausführungsform der Erfindung ist zwischen der gegebenenfalls flammen- oder coronabehandelten Folie und der Klebeschicht ein Haftvermittler vorhanden, der den guten Verbund der Klebemasse mit der Folie und die Vernetzung der Klebemasse garantiert.
Der optional eingesetzte Haftvermittler zwischen Klebemasse und Trägerfolie optimiert den Verbund zwischen den genannten Schichten.

Der Schichtauftrag der Klebeschicht beträgt insbesondere 10 bis 45 g/qm. In einer bevorzugten Ausführung wird der Schichtauftrag von 13 bis 28 g/qm eingestellt.

In einer besonders bevorzugten Variante enthalten die Klebemassen der erfindungsgemäßen Klebebänder 45 bis 60 Gew.-% Naturkautschuklatex. Weiterhin erfindungsgemäß sind andere Naturkautschuklatices sowie Mischungen verschiedener Typen von Naturkautschuklatices.

Je nach Anwendung können der Klebemasse zugesetzt werden, und zwar unabhängig voneinander gewählt:

| | |
|---|---|
| a) 0,1 bis 5 Gew.-% | eines Alterungsschutzmittels, |
| b) 0,05 bis 5 Gew.-% | eines Entschäumers, |
| c) 0,05 bis 4 Gew.-%, 3 Gew.-%, insbesondere 0,3 bis | eines alkoxylierten Alkylphenols |
| d) 0,05 bis 20 Gew.-% | mindestens eines Farbpigments |

Weiter vorzugsweise enthält die Klebeschicht bis zu 20 Gew.-% mindestens eine Harzdispersion auf Basis von Kohlenwasserstoffharzen mit einem Erweichungspunkt von 20 °C bis 85 °C.
Die Klebemasse kann insbesondere 0,05 bis 20 Gew.-% und bevorzugt 2 bis 15 Gew.-% der zusätzlichen Harzdispersion enthalten.

Als Rohstoff für die erfindungsgemäßen Klebebänder wird bevorzugt Standard Naturkautschuklatex mit einem Ammoniakgehalt von 0,7 Gew.-% verwendet, zum einen da der erwähnte Naturkautschuklatex preisliche Vorteile bietet und zum zweiten da sein relativ hoher Ammoniakgehalt eine gute Stabilisierung des Naturkautschuklatex ermöglicht. Im wesentlichen eignet sich Naturkautschuklatex sehr gut für die Verwendung von Klebemassen für Klebebänder. Durch das sehr hohe Molekulargewicht, die Verschlaufungen der Molekülketten, niedriger Glasübergangstemperatur und der fehlenden Mastikation, bei der Herstellung der Klebemassen, des Naturkautschuklatex zeigen Klebemassen auf Basis von Naturkautschuklatex eine hervorragende Ausgewogenheit zwischen Adhäsion und Kohäsion.

Durch die Verwendung von Klebemassen auf Basis von Naturkautschuklatex, das heißt wasserbasierenden Naturkautschuken, entfällt jede Art von mechanischem Abbau des Kautschuks. Die Klebemasse zeichnen sich daher durch exzellente Kohäsion aus.

Diese Eigenschaften sorgen für eine sehr hohe Verpackungssicherheit bei der Verwendung von Klebebändern mit einer Klebemasse auf Basis von Naturkautschuklatex, besonders bei Verwendung von kritischen Kartontypen und niedrigen Temperaturen.
Kritisch kann die mechanische Stabilität des Naturkautschuklatex in Bezug auf mechanische Scherbelastungen sein. Hierbei führen starke mechanische Scherbelastungen zur Koagulation des Naturkautschuklatex und somit zur fehlenden Verarbeitbarkeit. Möglichkeiten die Klebemassen auf Basis von Naturkautschuklatex gegenüber mechanischen Belastungen zu stabilisieren, sind zum einen der Einsatz von stabilisierenden, geeigneten Harzdispersionen und zum anderen der Einsatz von Emulgatoren.

Die erfindungsgemäßen Klebebänder enthalten vorzugsweise Naturkautschuklatex zwischen 30 bis 65 Gew.-% des Standard Naturkautschuklatex mit einem hohem Ammoniakgehalt.

Der Feststoffgehalt beträgt vorzugsweise zwischen 50 Gew.-% und 55 Gew.-%.

Wäßrige Harzdispersionen, d.h. Dispersionen von Harz in Wasser, sind bekannt. Herstellung und Eigenschaften sind beispielsweise beschrieben in "Resin Dispersions", Anne Z. Casey in Handbook of Pressure Sensitive Adhesive Technology, Second Edition, edited by Donatas Satas, Van Nostrand Reinhold New York, pp.545-566.

Harzdispersionen von Kohlenwasserstoffharzen sind ebenfalls bekannt und werden beispielsweise von der Firma Hercules BV unter dem Handelsnamen Tacolyn angeboten.

Für die erfindungsgemäßen Klebebänder werden Harzdispersionen auf Basis von modifizierten Kahlenwasserstoffharzen als Hauptharzkomponente verwendet. Die Klebemasse enthält zwischen 35 bis 70 Gew.-% der Harzdispersion und bevorzugt zwischen 40 bis 55 Gew.-% der Harzdispersion. Der Feststoffgehalt der Harzdispersion liegt insbesondere zwischen 40 und 70 Gew.-%, bevorzugt zwischen 45 und 60 Gew.-%.

Erfindungsgemäß ist auch die Verwendung von Harzdispersion auf Basis von Mischungen verschiedener Kohlenwasserstoffharze sowie von Mischungen von erfindungsgemäßen Kohlenwasserstoffharzen mit anderen Harzen.

Ebenfalls bekannt sind Harzdispersionen auf Basis von modifizierten Kohlenwasserstoffen, und von besonderem Interesse sind hierbei C5/C9 Kohlenwasserstoff-Harzdispersionen, welche mit Aromaten modifiziert sind. Hierbei kann durch den Anteil des Aromatengehaltes die Polarität der Harzdispersion und damit der Klebemasse eingestellt werden. Neben der Polarität der Klebemasse wird die Härte des Harzes beeinflußt. Je geringer der Aromatengehalt ist, desto niedriger ist hierbei die Polarität der modifizierten Kohlenwasserstoffharzdispersion.

Alterungsschutzmittel für Klebemassen auf Basis von Naturkautschuk sind bekannt. Drei verschiedene Arten von Alterungsschutzmittel finden als Antioxidantien für Klebemassen besonders Verwendung. Alterungsschutzmittel auf Basis von Aminen, Dithiocarbamaten und auf Basis von Phenolen. Alterungsschutzmittel auf Basis von Phenolen sind sehr wirksam bei Einfluß von UV Strahlung und Sonnenlicht.

Für die erfindungsgemäßen Klebebänder werden Alterungsschutzmittel auf Basis von Phenolen eingesetzt. Die Klebemasse enthält insbesondere 0,1 bis 5 Gew.-% eines Alterungsschutzmittels auf Basis von Phenolen. Erfindungsgemäß ist auch die Verwendung anderer Typen von Alterungsschutzmitteln, wie beispielsweise Alterungsschutzmittel auf Basis von Aminen und Dithiocarbamaten.

Anorganische und organische Pigmente für Klebmassen auf Basis von Naturkautschuk sind bekannt. Für die Anfärbung von Klebemassen auf Basis von Naturkautschuk wird insbesondere Titandioxid beziehungsweise Titandioxid in Kombination mit anders gefärbten Farbpigmenten eingesetzt.
Für die erfindungsgemäßen Klebebänder werden geeignete anorganische und/oder organische Farbpigmente in Dispersionsform eingesetzt. Die Klebemasse enthält vorzugsweise 0,05 bis 20 Gew.-% eines organischen beziehungsweise anorganischen Farbpigments. Weiterhin erfindungsgemäß ist die Verwendung von Pigmenten auf Basis von Mischungen verschiedener anorganischer und organischer Pigmente.

Die Verwendung von alkoxylierten Alkylphenolen als Weichmacher wird unter anderem vorgeschlagen in "Modification of Acrylic Dispersions", Alexander Zettl in Handbook of Pressure Sensitive Adhesive Technology, Second Edition, edited by Donatas Satas, Van Nostrand Reinhold New York, p.471. Die Eigenschaften der alkoxylierten Alkylphenole werden durch den Alkylrest und überwiegend durch den Aufbau der Polyglykoletherkette bestimmt. In einer bevorzugten Ausführung wird propoxyliertes Alkylphenol verwendet. Bevorzugt sind wasserlösliche alkoxylierte Alkylphenole.

Die Verwendung von Alkylphenolpolyglycolethem als Emulgatoren zur Stabilisierung der Naturkautschuklatex Dispersionsklebemasse wird unter anderem vorgeschlagen in "Compounding Natural Latex in water-based PSA's", Richard C. Oldack und Robert. E. Bloss in Adhesive Age, April 1979, pp 38-43.
Die Eigenschaften und die stabilisierende Wirkung der alkoxylierten Alkylphenole oder allgemein der Polyethylenoxyethanolat-Kondensate werden überwiegend durch die Polyglykoletherkette bestimmt. Hierbei ist ein Zusammenhang zwischen Länge der Polyglykoletherkette und der stabilisierenden Wirkung für Naturkautschuklatex gefunden worden.

Die erfindungsgemäßen Klebemassen können 0,05 bis 5 Gew.-% alkoxyliertes Alkylphenol, in einer bevorzugten Ausführung 1 bis 3 Gew.-%, enthalten.

Das Klebeband ruft beim Abrollen in einem Abstand von 25 cm vom Zentrum der Klebebandrolle und einer Abrollgeschwindigkeit von 45 m/min einen Geräuschpegel von weniger als 80 dB (A) hervor.

Die Herstellung der erfindungsgemäßen Klebebänder kann nach den bekannten Verfahren erfolgen. Eine Übersicht über übliche Herstellungsverfahren findet sich beispielsweise in "Coating Equipment", Donatas Satas in Handbook of Pressure Sensitive Adhesive Technology, Second Edition edited by Donatas Satas, Van Nostrand New York, pp. 708-808. Die bekannten Verfahren zum Trocknen und Schneiden der Klebebänder sind ebenfalls im Handbook zu finden.

Die erfindungsgemäßen Klebebänder sind für eine große Anzahl von Klebebandanwendungen geeignet. Ein wichtiges Anwendungsfeld sind Verpackungsanwendungen. Die Klebebänder sind geeignet als Kartonverschlußbänder, allgemeine Verpackungsklebebänder, Strapping-Tapes, Klebebänder zum Verschließen von Kunststoffverpackungen und Kunststoffbeuteln. Die Klebebänder sind zur Palettensicherung geeignet. Weitere Anwendungen sind das Bündeln loser Güter und Transportgüter, wie beispielsweise Rohren, Holzleisten u.a.. Die erfindungsgemäßen Klebbänder können zur Transportsicherung von beispielsweise Kühlschränken und anderen elektrischen und elektronischen Geräten verwendet werden. Weitere Anwendungen sind Etikettenschutz, Oberflächenschutz, beispielsweise im Baubereich und Aufreißstreifen für Verpackungen. Ebenso sind Anwendungen im Bürobereich möglich.
Die Verpackungsklebebänder weisen insbesondere Lauflängen auf von 66, 100 und 1000 m. Als Breite der Rollen werden üblicherweise 18, 24, 36, 48, 50 und 72 mm gewählt.
Die bevorzugten Farben sind braun, weiß und transparent. Die Bedruckung erfolgt auf Rollen von 144 oder 150 mm Breite, die anschließend wieder auf die oben genannten Breiten geschnitten werden.

Betont werden soll nochmals, daß die der Klebemasse entgegengesetzte Trägerseite des Klebebandes nicht mittels Coronabehandlung aktiviert werden muß. Auf diese Weise wird ein zusätzlicher, technisch aufwendiger Verfahrensschritt eingespart, der

Im folgenden soll die Erfindung anhand von Beispielen erläutert werden, ohne die Erfindung unnötig einschränken zu wollen.

### Beispiele

### Beispiel a: Folie

Es wird eine biaxial gereckte Folie auf Basis von Polypropylen der Fa. Radici verwendet.

| | |
|---|---|
| Foliendicke | 28 µm |
| Kennzeichnung | Radil T |
| Firma/Hersteller | Radici SpA |
| Reißdehnung längs | 130% |
| Reißdehnung quer | 50% |
| Elastizitätsmodul längs | 2500 N/qmm |
| Elastizitätsmodul quer | 4000 N/qmm |

Die Oberflächenenergie der unbehandelten BOPP-Folie Radil T25 beträgt weniger als 30 mN/m. Die Oberflächenenergie der Polypropylenoberfläche, die mit Haftvermittler beschichtet wird, beträgt 44 bis 46 mN/m nach Coronabehandlung.
Die Oberflächenenergie der unbehandelten Polypropylenoberfläche der Folie Radil T25 beträgt weniger als 30 mN/m. Dies ist die der Klebemasse gegenüberliegenden Folienseite.

### Beispiel b: Komponenten

Eingesetzte Komponenten:
- b1: der Klebemasse
- b1.1: Naturkautschuklatex beziehbar über die Fa. Weber&Schaer, Hamburg; (Feststoffgehalt 60 %)
- b1.2.1.: Wäßrige Harzdispersion auf Basis von Kohlenwasserstoffharzen (Fa. Hercules BV, Tacolyn 1070, Feststoffgehalt 55 Gew.-%; Erweichungspunkt 70 °C)
- b.1.3.: Alterungsschutzmittel AD112 der Fa. Synthomer GmbH, Frankfurt
- b1.4: Entschäumer Foammaster 306 der Fa. Henkel, Düsseldorf
- b2: des Primers
- b2.1: Trapylen 6965W (Niedrig chloriertes Polypropylendispersion der Fa. Tramaco, Hamburg) beziehungsweise
Butofan LS103 (Styrol-Butadien Dispersion der Firma BASF)

### Beispiel c: Rezepturen

- c1: Rezeptur A der Klebemasse

Die Rezeptur ist in Gew.-% angegeben:

| | |
|---|---|
| Naturkautschuklatex Dispersion | 52 Gew.-% |
| Tacolyn 1070 | 47 Gew.-% |
| Alterungsschutzmittel | 0,7 Gew.-% |
| Entschäumer | 0,3 Gew.-% |

- c2: Rezeptur B des Primers

Die Rezeptur ist in Gew.-% angegeben:

| | |
|---|---|
| Trapylen 6965W beziehungsweise | 100 Gew.-% |
| Butofan LS103 | 100 Gew.-% |

### Beispiel d: Herstellung der Klebemasse und des Primers

Die Herstellung der zu beschichtenden Klebemassen A wird wie folgt durchgeführt:
- d1: In die Naturkautschuklatex wird bei 23 °C die Harzdispersion unter ständigem Rühren mit einem üblichen mechanischen Rührer zugegeben. Danach wird 15 min weiter vorsichtig gerührt.
- d2: In die Mischung von Schritt 1 (d1) wird vorsichtig das Alterungsschutzmittel und der Entschäumer eingerührt. Danach wir 15 min weitergerührt. Danach erfolgt die Beschichtung.

Die Herstellung des Primers mit Rezeptur B wird wie folgt durchgeführt:
- d3: Trapylen 6965W und Butofan LS103 werden ohne weitere Vorbehandlung vermischt und eingesetzt.

### Beispiel e: Beschichtung

Die Beschichtung der Folie a mit der Primer Rezeptur B und der Klebemasse Rezepturen A und B erfolgt durch einen Drahtrakel. Hierbei wird in einem ersten Schritt der Primer aufgetragen, kurz getrocknet bei 80 bis 90 °C und direkt danach in einem zweiten Schritt (in-line oder off-line) die Klebemasse auf die Primerschicht aufgetragen.

Das Drahtrakel und die Beschichtungsgeschwindigkeit werden so eingestellt, daß nach der Trocknung der beschichteten Folie ein Masseauftrag von ca. 18 g/qm gemessen wird und ein Primerauftrag von 0,6 bis 0,8 g/qm gemessen wird. Die Beschichtung erfolgte auf einer Technikumsstreichanlage mit einer Arbeitsbreite von 500 mm und einer Beschichtungsgeschwindigkeit von 10 m/min. Hinter der Beschichtungsstation mit Drahtrakelauftragswerk befindet sich ein Trockenkanal, der mit heißer Luft (ca. 100 °C) betrieben wird. Die beschichtete Folie wurde in einer Breite von 50 mm und 60 m Länge konfektioniert. Die Bestimmung der klebetechnischen Daten erfolgte nach zweitägiger Lagerung bei 23 °C und nach ein- bis dreimonatiger Lagerung bei 23 °C.

### Beispiel f: Ergebnisse

Die eingesetzten Prüfmethoden sind im folgenden kurz charakterisiert:

Zur Bestimmung des Masseauftrags wird aus der beschichteten Folie ein kreisrundes Muster mit bekanntem Flächeninhalt ausgeschnitten und gewogen. Danach wird die Klebemasse durch Ablösen mit Benzin entfernt und die nun klebemassefreie Folie erneut gewogen. Aus der Differenz wird der Masseauftrag in g/m² berechnet.

Zur Charakterisierung des Anfaßvermögens zu Karton wird das Klebeband mit einem handelsüblichen Handabroller auf den Karton aufgebracht und mittels einer 2 kg schweren Stahlrolle angedrückt (zweimaliges Überrollen). Nach einer Wartezeit von 3 min wird das Klebeband mit einer Geschwindigkeit von ca. 30m/min unter einem Winkel von ca. 130° zur Kartonoberfäche parallel abgezogen. Die Beurteilung des Anfaßvermögens zu Karton erfolgt qualitativ anhand der Menge an ausgerissenen Papierfasern im Vergleich zu einem handelsüblichen Verpackungsklebeband wie tesapack 4124 der Fa. Beiersdorf, dessen Anfaßvermögen sehr gut charakterisiert wird.

Zur Bestimmung der Verpackungssicherheit wird ein Standardkarton (Versandkarton; 425 mm x 325 mm x 165 mm: Länge x Breite x Höhe: Fa. Europakarton; aufgebaut aus zweiwelliger Wellpappe mit 125 g/qm Außenlage aus Kraftliner) mit dem Klebeband mittels eines handelsüblichen Verpackungsautomaten (Fa. Knecht, Modell 6030 und Verschlußaggregat 6230, Einstellung ohne Bremsweg) verschlossen. Das Klebeband wird mittig im üblichen U-Verschluß aufgebracht, so daß an den Stimseiten jeweils 60 mm Klebeband verklebt sind. Der Karton wird vor dem Verschließen vollständig mit Erbsen gefüllt und auf der Seitenfläche liegend bei 40 °C und bei 23 °C gelagert. Die Verpackungssicherheit wird sehr gut charakterisiert, wenn der Karton länger als 30 Tage verschlossen bleibt. Weiterhin wird das Rutschen des Klebebandes am Karton beziehungsweise das Verhalten des Klebebandes an den verklebten Stellen charakterisiert und beschrieben und mit dem Referenzklebeband verglichen (Tabelle 1).

Die Bestimmung des Abrollgeräusches erfolgt beim Abrollen des Klebebandes mit einer Abrollgeschwindigkeit von 45 m/min. Gemessen wird Abrollgeräusch in dB (A) im Abstand von 25 cm vom Zentrum der Klebebandrolle mit einem handelsüblichen Lautstärkemeßgerät der Firma Brüel&Kjear (Type 2226). Eine gemessene Lautstärke kleiner als 80 dB (A) wird als leise eingestuft.

Die Messung der Abrollkraft erfolgt bei konstanter Abrollgeschwindigkeit (30 m/min) durch Messung des Drehmoments und Berechnung der Abrollkraft nach den bekannten Formeln in N/cm.

Die Ergebnisse der Untersuchung eines erfindungsgemäßen Klebebands mit ungeprägter Folie und die Einschätzung zu Vergleichsklebebändern ist in Tabelle 1 wiedergegeben.

**Tabelle 1: Verhalten der erfindungsgemäßen Klebebänder**

| Aufbau/ Lagerzeit/ Temperatur | Muster A | Muster B | Muster C | Muster D |
|---|---|---|---|---|
| | | tesa 4024 mit Rückseitencorona | tesa 4024 ohne Rückseitenbehandlung | tesa 4089 Mit Rückseitenlackierung |
| Klebemasse | Klebemasse A | Acrylatdispersion | Acrylatdispersion | Lösemittelhaltige Naturkautschukmasse |
| Träger | Folie a | Folie a | Folie a | Folie a |
| Primer | Rezeptur B | Kein Primer | Kein Primer | Standard Primer |
| Klebemasseauftrag [g/m²] | 18-22 | 24 | 24 | 20 |
| Auftrag Primerschicht [g/m²] | 0,8 | - | - | 0,6 |
| Oberflächenspannung Rückseite | ~ 30 mN/m | - 36-38 mN/m | ~ 30mN/m | Carbamatlackierung |
| Masseverankerung | Gut | Gut | Gut | Gut |
| Abrollverhalten [laut/leise] | leise | leise | laut | laut |
| Abrollkraft bei 30 m/min [N/cm] | 3,3 | 4,5 | 1,5 | 0,7 |
| Verpackungssicherheit | Sehr gut | Gut | Gut | Gut |
| Anfaßverhalten zu Karton | Gut | Sehr gut | Sehr gut | Gut |

| | | | | |
|---|---|---|---|---|
| Muster A: Muster der erfindungsgemäßen Klebebänder ohne Rückseitencorona | | | | |

## Patentansprüche

1. Einseitig selbstklebend ausgerüstetes Klebeband, mit
a. einer Folie auf Basis gereckter Polyolefine, wobei die der Klebeschicht abgewandte Folienseite keine Oberflächenbehandlung aufweist,
b. einer einseitig auf die Folie aufgetragenen Klebeschicht, hergestellt aus einer Mischung enthaltend
| | |
|---|---|
| 30 bis 65 Gew.-% | ein Naturkautschuklatex |
| 35 bis 70 Gew.-% | eine wässrige Harzdispersion auf Basis eines Kohlenwasserstoffharzes, wobei als Harzdispersion eine C5/C9-Kohlenwasserstoff-Harzdispersion, welche mit Aromaten modifiziert ist, verwendet wird. |

2. Klebeband nach Anspruch 1, **dadurch gekennzeichnet, dass** die Folie aus gereckten Polyolefinen besteht und/oder eine Foliendicke zwischen 20 und 50 µm aufweist.

3. Klebeband nach Anspruch 1 und 2, **dadurch gekennzeichnet, dass** die Folie aus monoaxial gereckten Folien auf Basis von Polypropylen besteht und/oder eine Foliendicke zwischen 25 und 200 µm, insbesondere zwischen 40 und 130 µm, aufweist.

4. Klebeband nach zumindest einem der vorhergehenden Ansprüche, **dadurch gekennzeichnet, dass** zwischen der Folie und der Klebeschicht eine Schicht aus einem Primer aufgebracht ist.

5. Klebeband nach zumindest einem der vorhergehenden Ansprüche, **dadurch gekennzeichnet, dass** der Schichtauftrag der Klebeschicht auf die Folie 10 bis 45 g/qm beträgt.

6. Klebeband nach zumindest einem der vorhergehenden Ansprüche, **dadurch gekennzeichnet, dass** die Klebeschicht bis zu 20 Gew.-% mindestens eine Harzdispersion auf Basis von Kohlenwasserstoffharzen mit einem Erweichungspunkt von 20 °C bis 85 °C enthält.

7. Klebeband nach zumindest einem der vorhergehenden Ansprüche, **dadurch gekennzeichnet, dass** die Klebeschicht enthält zu
| | |
|---|---|
| 0,1 bis 5 Gew.-% | ein Alterungsschutzmittel, |
| 0,05 bis 4 Gew.-%, insbesondere 0,3 bis 3 Gew.-%, | ein alkoxyliertes Alkylphenol, |
| 0,05 bis 5 Gew.-% | ein Entschäumer und/oder |
| 0,05 bis 20 Gew.-% | zumindest ein Farbpigment. |

8. Klebeband nach zumindest einem der vorhergehenden Ansprüche, **dadurch gekennzeichnet, dass** das Klebeband beim Abrollen in einem Abstand von 25 cm vom Zentrum der Klebebandrolle und einer Abrollgeschwindigkeit von 45 m/min einen Geräuschpegel von weniger als 80 dB (A) hervorruft.

9. Verwendung des Klebebandes nach einem der Ansprüche 1 bis 7 als Verpackungsklebeband, mit gutem Anfassvermögen zu Papier, insbesondere recyceltem Papier, ausreichender Kohäsion, guter Verpackungssicherheit, guter Masseverankerung und leichtem Abrollen.

## Claims

1. Adhesive tape self-adhesively coated on one side, comprising
a. a film based on oriented polyolefins, the side of the film remote from the adhesive layer having no surface treatment,
b. an adhesive layer applied to one side of the film, prepared from a mixture comprising
| | |
|---|---|
| from 30 to 65% by weight | of a natural rubber latex |
| from 35 to 70% by weight | of an aqueous resin dispersion based on a hydrocarbon resin, (5/C9 hydrocarbon resin dispersion which has been modified with aromatics being used as the resin dispersion.. |

2. Tape according to Claim 1, **characterized in that** the film is composed of oriented polyolefins and/or has a thickness of between 20 and 50 µm.

3. Tape according to Claim 1 and 2, **characterized in that** the film is composed of monoaxially oriented films based on polypropylene and/or has a film thickness of between 25 and 200 µm, in particular between 40 and 130 µm.

4. Tape according to at least one of the preceding daims, **characterized in that** a layer of a primer has been applied between the film and the adhesive layer.

5. Tape according to at least one of the preceding daims, **characterized in that** the application rate of the adhesive layer to the film is from 10 to 45 g/m².

6. Tape according to at least one of the preceding claims, **characterized in that** the adhesive layer contains up to 20% by weight of at least one resin dispersion based on hydrocarbon resins having a softening point of from 20°C to 85°C.

7. Tape according to at least one of the preceding daims, **characterized in that** the adhesive layer contains
| | |
|---|---|
| from 0.1 to 5% by weight | of an ageing inhibitor, |
| from 0.05 to 4% by weight, in particular from 0.3 to 3% by weight, | of an alkoxylated alkylphenol, |
| from 0.05 to 5% by weight | of a defoamer and/or |
| from 0.05 to 20% by weight | of at least one colour pigment. |

8. Tape according to at least one of the preceding claims, **characterized in that** on unwinding at a distance of 25 cm from the centre of the adhesive tape roll at an unwind speed of 45 m/min the adhesive tape gives rise to a noise level of less than 80 dB (A).

9. Use of the tape according to any of Claims 1 to 7 as an adhesive packageing tape possessing good tack with respect to paper, especially recycled paper, adequate cohesion, good packageing security, good anchoring of the adhesive, and easy unwind.

## Revendications

1. Bande adhésive apprêtée de manière auto-adhésive d'un côté, présentant
a) une feuille à base de polyoléfine étirée, le côté de la feuille dos à la couche adhésive ne présentant pas de traitement de surface,
b) une couche adhésive appliquée d'un côté sur la feuille, préparée à partir d'un mélange contenant
30 à 65% en poids d'un latex de caoutchouc naturel
35 à 70% en poids d'une dispersion de résine aqueuse à base d'une résine hydrocarbonée, en utilisant comme dispersion de résine une dispersion de résine d'hydrocarbures en C₅ à C₉ modifiés avec des aromatiques.

2. Bande adhésive selon la revendication 1, **caractérisée en ce que** la feuille est constituée par des polyoléfines étirées et/ou présente une épaisseur de feuille entre 20 et 50 µm.

3. Bande adhésive selon la revendication 1 et 2, **caractérisée en ce que** la feuille est constituée par des feuilles étirées monoaxialement à base de polypropylène et/ou présente une épaisseur de feuille entre 25 et 200 µm, en particulier entre 40 et 130 µm.

4. Bande adhésive selon au moins l'une quelconque des revendications précédentes, **caractérisée en ce qu'**une couche d'un apprêt est appliquée entre la feuille et la couche adhésive.

5. Bande adhésive selon au moins l'une quelconque des revendications précédentes, **caractérisée en ce que** la couche de masse adhésive est appliquée sur la feuille à raison de 10 à 45 g/m².

6. Bande adhésive selon au moins l'une quelconque des revendications précédentes, **caractérisée en ce que** la couche adhésive contient jusqu'à 20% en poids d'au moins une dispersion de résine à base de résines hydrocarbonées présentant un point de ramollissement de 20°C à 85°C.

7. Bande adhésive selon au moins l'une quelconque des revendications précédentes, **caractérisée en ce que** la couche adhésive contient, à raison de 0,1 à 5% en poids d'un agent de protection contre le vieillissement,
0,05 à 4% en poids, en particulier de 0,3 à 3% en poids, d'un alkylphénol alcoxylé,
0,05 à 5% en poids d'un antimousse et/ou
0,05 à 20% en poids d'au moins un pigment coloré.

8. Bande adhésive selon au moins l'une quelconque des revendications précédentes, **caractérisée en ce que** la bande adhésive provoque lors du déroulement, à une distance de 25 cm du centre du rouleau de la bande adhésive et à une vitesse de déroulement de 45 m/min, un pic de bruit inférieur à 80 dB(A).

9. Utilisation de la bande adhésive selon l'une quelconque des revendications 1 à 7 comme bande adhésive d'emballage, présentant un bon pouvoir collant sur du papier, en particulier le papier recyclé, une cohésion suffisante, une bonne sécurité d'emballage, un bon ancrage de la masse et un déroulement aisé.
